# EUROPÄISCHE PATENTSCHRIFT

(11) **EP 0 792 078 B1**
(45) Veröffentlichungstag und Bekanntmachung des Hinweises auf die Patenterteilung: **19.01.2005**
(21) Anmeldenummer: 97102150.6
(22) Anmeldetag: 11.02.1997
(51) Int. Cl.: H04Q 9/14

(54) **Aktuator-sensor-interface-system**
Actuator-sensor interface system
Système d'interface pour capteurs-actionneurs

(30) Priorität: 22.02.1996 DE 19606673
(43) Veröffentlichungstag der Anmeldung: 27.08.1997
(73) Patentinhaber: SIEMENS AKTIENGESELLSCHAFT, 80333 München (DE)
(72) Erfinder: Wiesgickl, Bernhard, Dipl.-Ing., 92249 Vilseck (DE)

(56) Entgegenhaltungen:
- FR-A- 2 553 950
- ELEKTRONIK, Bd. 43, Nr. 12, 14.Juni 1994, POING,DE, Seiten 64-68, XP000464137 FLASCHKA E: "BINARE SENSOREN AM BUS. MIT ASI EINE DURCHGANGIGE DATENUBERTRAGUNG BIS ZUM EINFACHEN SENSOR"
- PATENT ABSTRACTS OF JAPAN vol. 018, no. 486 (E-1604), 9.September 1994 & JP 06 164595 A (TOSHIBA CORP), 10.Juni 1994,

## Beschreibung

Die Erfindung bezieht sich auf ein Aktuator-Sensor-Interface-System mit einem Master gemäß dem Oberbegriff des Anspruchs 1.

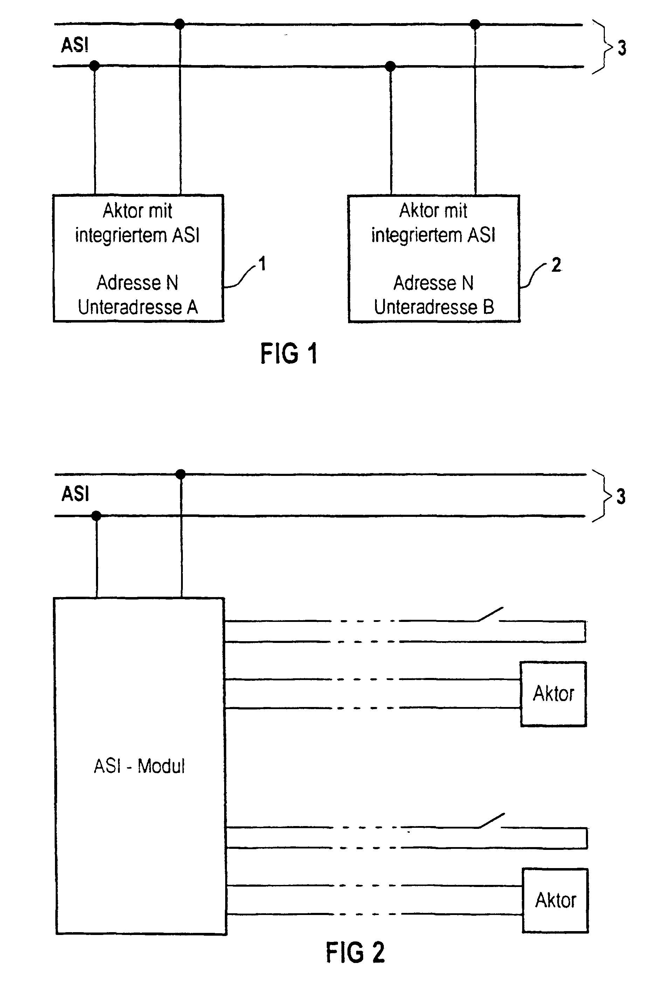

Ein derartiges Informationssystem ist zum Beispiel aus der Siemens-Druckschrift (Siemens-Bestell-Nr. E20.001-P285-A497) und aus einem Aufsatz mit dem Titel "Binäre Sensoren am Bus" (Elektronik 12/1994; Seiten 64 bis 68) bekannt. Das Aktuator-Sensor-Interface-System (ASI) besteht hier aus drei Hardware-Komponenten, die über Interface untereinander und mit ihrer Umgebung verbunden sind. Diese Komponenten umfassen das übertragungssystem, die Slaves und einen Master. Das Ubertragungssystem besteht hier aus einer Zweidrahtleitung, die über verschiedene Topologien die Slaves untereinander und mit dem Master verbindet, der Energieversorgung und der Datenentkopplung. Über die Zweidrahtleitung wird sowohl der Datenverkehr als auch die Energieverteilung abgewickelt. Der Slave stellt über ein Interface die Verbindung zum Sensor oder Aktuator her, wobei die Slave-Funktion auch vollständig in den Sensor bzw. Aktuator integriert werden kann. Der Master stellt über ein weiteres Interface, die Steuerungsseite, die Verbindung zum Hostsystem her, das entweder aus einer speicherprogrammierbaren Steuerung, einem PC oder aus einem Koppler zu einem übergeordneten Feldbussystem besteht. Der Master steuert den gesamten Datenverkehr über das Übertragungssystem und nimmt notwendige Managementfunktionen wahr. Für die Adressierung von Slaves stehen bei dem hier beispielhaft beschriebenen System 5 Bit zur Verfügung, so dass sich zur Adressierung von Slaves maximal 32 Slave-Adressen ergeben. Bei dem bekannten System erhält eine dieser Adressen eine Sonderfunktion für die automatische Adressvergabe, so dass der Anschluss an einen Strang eines Aktuator-Sensor-Netzes auf maximal 31 Slaves begrenzt ist. Da die Slaves mit jeweils vier Datenbit arbeiten, können maximal 124 rein binäre Sensoren und/oder Aktoren angeschlossen werden. Die ASI-Slaves sind als Kopplungsmodule mit vier Bit oder zweimal vier Bit Verarbeitung ausgeführt, wie z.B. in FIG 2 dargestellt. Die Anschaltung der Sensoren und Aktoren an die ASI-Koppelmodule erfolgt also über eine konventionelle Verdrahtung. Der an sich durch das Aktuator-Sensor-Interface-System gegebene Vorteil einer einfachen Verdrahtung wird also nicht vollends ausgenutzt. Würde man im anderen Fall die Sensoren und Aktoren selbst mit dem integrierten Schaltkreis ausstatten, wie er ansonsten in jedem Slave erforderlich ist, so hätte man den Nachteil, dass anstelle von vorher 124 reinen binären Sensoren oder Aktoren aufgrund der maximal verfügbaren 31 Adressen sich diese Anzahl von Teilnehmern entsprechend reduzieren würde.

Weiterhin ist ein serieller Bus-Controller aus der JP 6164595 bekannt, der zur Reduzierung der Datenmenge auf einem seriellen Bus und der Steuerzeit für eine Gruppe von Teilnehmern dient sowie die Bearbeitungsgeschwindigkeit auf dem seriellen Bus senkt.

Der Erfindung liegt die Aufgabe zugrunde, ein Aktuator-Sensor-Interface-System der obengenannten Art dahingehend zu verbessern, dass an dieses viele Teilnehmer, die nur ein- oder zwei-Bit-Information liefern oder benötigen direkt an die Leitung anschließbar sind, wobei die Anzahl der anschließbaren Teilnehmer größer ist als die Anzahl der verfügbaren Slave-Adressen.
Diese Aufgabe wird erfindungsgemäß mit den Merkmalen nach Anspruch 1 gelöst.

Weitere vorteilhafte Ausführungen der Erfindung sind den Unteransprüchen zu entnehmen.

Gemäß einer vorteilhaften Ausführungsform der Erfindung sind die Slaves jeweils über einen Schalter mit der Leitung verbunden und in jedem Slave ist eine Logik vorgesehen, die Mittel zur Auslösung der Schalter (4,5) nach Erkennen des Nichtaufrufs des betreffenden Slaves (1 oder 2) unter Auswertung des Informationsteils des Master-Telegramms aufweist. Mit diesen technischen Maßnahmen ist es möglich, die Slave-Antwort der nicht zur Kommunikation vorgesehenen Slaves zu unterdrücken, die dieselbe Slave-Adresse wie der aufgerufene Slave besitzen.

Vorteilhafterweise erfolgt bei Slaves mit identischer Slave-Adresse die Freigabe der Slave-Antwort zyklisch jeweils bei einem anderen Slave.

Weiterhin ist es vorteilhaft, wenn das Master-Telegramm ein Datenteil mit einem die Freigabe der Slave-Antwort steuernden Inhalt enthält.

Außerdem ist es auch vorteilhaft, wenn das Master-Telegramm einen Parameterteil mit einem die Freigabe der Slave-Antwort steuernden Inhalt enthält.

Die Leitung zur Datenübertragung und Energieverteilung ist vorteilhafterweise als Zweidraht-Bus ausgeführt.

Ein Ausführungsbeispiel der Erfindung wird im folgenden anhand einer Zeichnung näher erläutert. Es zeigen:
- FIG 1: das Prinzip eines Aktuator-Sensor-Interface-Systems mit direkt angekoppelten Aktoren,
- FIG 2: die bisher bekannte Ankopplung von Teilnehmern an das Aktuator-Sensor-Interface-System über Koppelmodule unter Verwendung konventioneller Verdrahtung,
- FIG 3: eine Ankopplung von Slaves über Schalter zur Unterdrückung der Slave-Antwort und
- FIG 4: eine Anschaltung von Slaves mit Beschaltung für Informationsbits im Master-Telegramm.

FIG 1 zeigt die direkte Ankopplung von zwei Aktoren 1,2 mit einem für das ASI-System erforderlichen speziellen integrierten Schaltkreis an einer als Zweidraht-Bus 3 ausgeführte Leitung, die an einen hier nicht dargestellten Master angekoppelt ist. Die beiden Aktoren 1,2 haben dieselbe Slave-Adresse N und unterschiedliche Unteradressen A bzw. B, die durch unterschiedliche Informationsbits im Informationsteil des Master-Telegramms unterschieden und mitgeteilt werden. Der Informationsteil des Master-Telegramms besteht hier z.B. aus vier Bits, von denen beispielsweise nur drei zur echten Information dienen und das vierte Bit zur Unterscheidung zweier Slaves 1,2, die dieselbe Slave-Adresse N besitzen, z.B. für den Aktor 1 den Informationsteil XXX0 und für den Aktor 2 den Informationsteil XXX1. Dies bedeutet, dass ein Master den Aktor 1 über die Slave-Adresse N in Verbindung mit dem Informationsteil XXX0 aufruft und nur dieser eine Slave-Antwort gibt und der Aktor 2 entsprechend bei einem Master-Aufruf mit derselben Slave-Adresse N, aber in Verbindung mit dem Informationsteil XXX1 aufgerufen wird. Dies bringt den Vorteil mit sich, daß mit nur einer einzigen Slave-Adresse N zwei Slaves 1,2 bei einfacher, d.h. direkter Verdrahtung mit dem Zweidraht-Bus 3 ansprechbar sind. Allerdings sind hierfür zwei Zyklen erforderlich, um die Kommunikation vom Master her mit den beiden Slaves 1,2 nacheinander durchzuführen. Als Slaves kommen hierbei Teilnehmer, wie z.B. Schütze, berührungslos arbeitende Schaltgeräte, Befehlsgeber usw. in Frage.

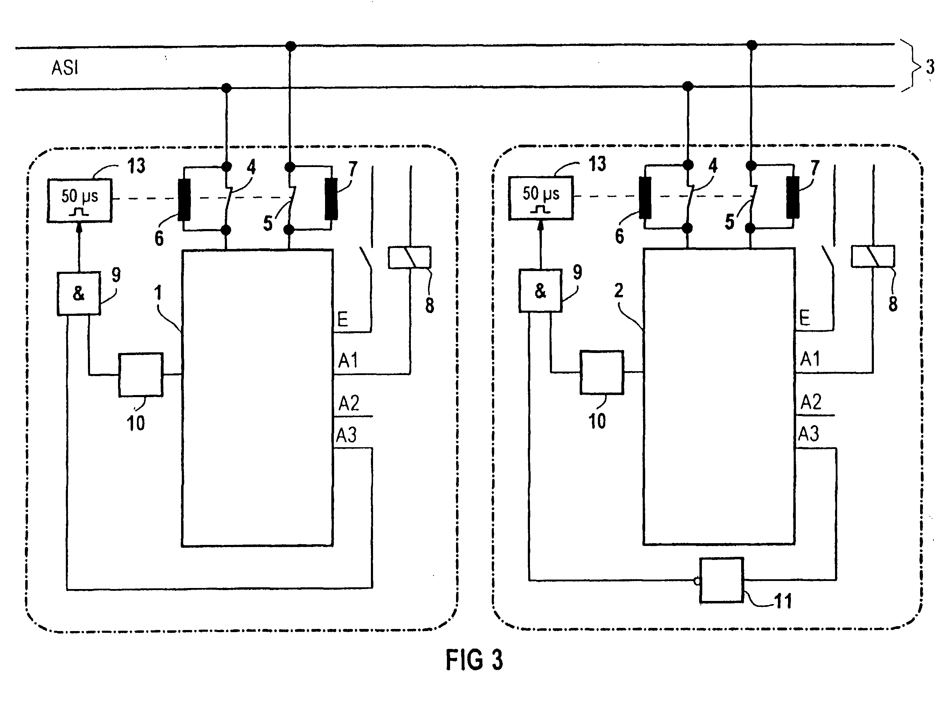

Derartige Slaves müssen mit einem speziellen integrierten Schaltkreis ausgestattet sein und eine Beschaltung enthalten, die den Informationsteil des Master-Telegramms auswerten und bei Nichtübereinstimmung mit der Unteradresse des jeweiligen Slaves die Slave-Antwort unterdrücken. Eine erste solche Schaltung zeigt FIG 3, in der zwei Slaves 1,2 mit denselben Slave-Adressen N und unterschiedlichen Unteradressen A und B an den Zweidraht-Bus 3 eines Aktuator-Sensor-Interface-Systems (ASI) angeschlossen sind. Die Anschaltung des Slaves 1 erfolgt über zwei Schalter 4,5, zu denen jeweils eine Drossel 6 bzw. 7 parallel geschaltet ist. Die integrierten Schaltkreise beider Slaves haben einen Eingang E und drei Ausgänge A1, A2, A3. Der Eingang ist als Rückmeldeeingang in beiden Ausführungen geschaltet. Beide Slaves 1,2 haben an einen ihrer Ausgänge A1 bzw. A2 eine Schützspule 8 geschaltet. Der Ausgang A3 ist mit einer Schaltung, bestehend aus einer Zeitstufe 13, einem Und-Glied 9 und einer Impulsverlängerung 10, beschaltet und weist beim Slave 2 zusätzlich einen Inverter 11 auf. Die Drosseln 6,7 parallel zu den Schaltern 4,5 dienen zur Gleichstromversorgung des integrierten Schaltkreises. Die Schalter 4,5 sind normalerweise geschlossen und werden bei obengenannter Nichtübereinstimmung mit der Unteradresse des jeweiligen Slaves von einer Logik im Slave zur Unterdrückung der Slave-Antwort kurzzeitig von einer 50 µsek Zeitstufe geöffnet.

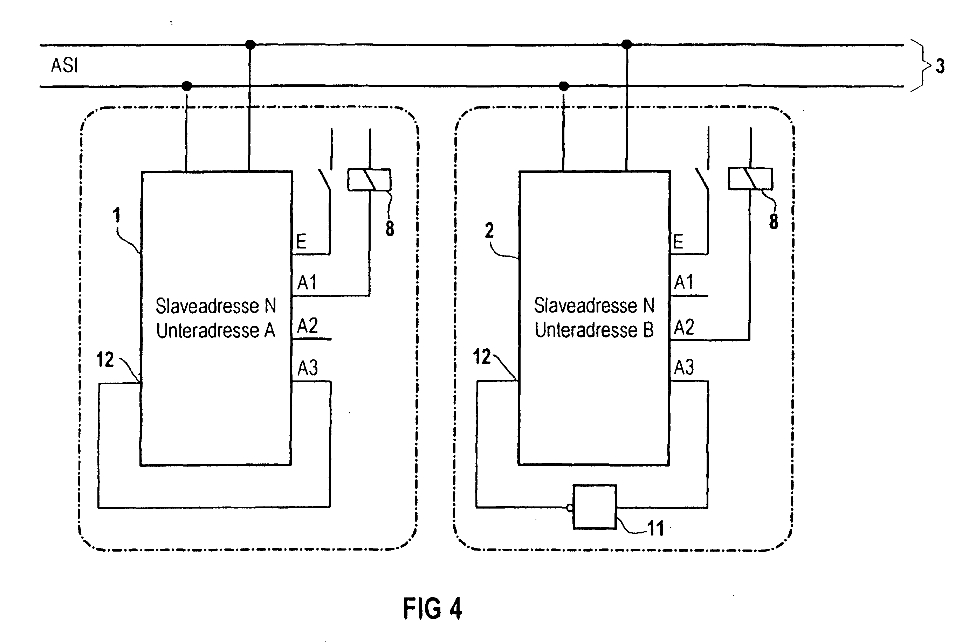

Gemäß einem weiteren in FIG 4 dargestellten Ausführungsbeispiel sind die Slaves 1,2 mit einem Send-Disable-Eingang 12 versehen, wodurch sich die zur Unterdrückung der Slave-Antwort erforderliche externe Schaltung wesentlich reduziert. Es ist nurmehr noch ein Inverter 11 beim Slave 2 zusätzlich notwendig.

Mit den Ausführungsformen gemäß FIG 3 und 4 können bei den Slaves 1 oder 2 mit der vom Master aufgerufenen Slave-Adresse N zwar Ausgänge geh- bzw. zurückgesetzt werden, eine Rückmeldung an den Master findet jedoch nur von dem speziell angesprochenen Slave mit der zugehörigen Unteradresse statt, während beim anderen Slave die Rückmeldung unterdrückt wird. Dies bedeutet, dass die Slave-Antwort zyklich jeweils bei einem anderen Slave freigegeben wird, was ermöglicht, dass jeder Slave seinen Status an den Master zurückmeldet.

Im Master-Telegramm ist neben der Slave-Adresse ein Informationsteil enthalten, der zu einem normalen Datenaufruf oder auch zu einem Parameter-Aufruf dienen kann. Die Unteradressierung von Slaves mit gleicher Slave-Adresse kann wahlweise über Informationsbits des Datenaufrufs oder des Parameter-Aufrufs erfolgen.

Obwohl die vorliegende Erfindung unter Bezugnahme auf die in der beigefügten Zeichnung dargestellte Ausführungsform erläutert ist, sollte berücksichtigt werden, dass damit nicht beabsichtigt ist, die Erfindung nur auf die dargestellte Ausführungsform zu beschränken, sondern alle möglichen Änderungen, Modifizierungen und äquivalente Anordnungen, soweit sie vom Inhalt der Patentansprüche gedeckt sind, einzuschließen.

## Patentansprüche

1. Aktuator-Sensor-Interface-System mit einem Master, mit mehreren Slaves (1,2), die über eine Leitung (3) mit dem Master verbunden sind und denen jeweils eine eigene, zur Unterscheidung von den anderen Slaves dienende n-Bit-Slave-Adresse zugeordnet ist, über die der jeweilige Slave (1 oder 2) durch den Master aufrufbar ist, wobei zur Kommunikation zwischen dem Master und den Slaves Mittel zur Ausgabe von Informationsbits als Slave-Antwort durch den Slave an den Master nach einem Master-Telegramm vorgesehen sind, das eine n-Bit-Slave-Adresse zum Aufruf eines bestimmten Slaves sowie einen aus n1-Bit bestehenden Informationsteil für den adressierten Slave (1 oder 2) enthält,
**dadurch gekennzeichnet, dass** mehreren Slaves (1,2), d.h. auch Teilnehmern, wie Aktoren und/oder Sensoren, dieselbe aus n-Bit bestehende Slave-Adresse zugeordnet ist und ein bestimmter dieser Slaves (1 oder 2) über im Informationsteil des zugehörigen Master-Telegramms enthaltene Informationsbits abrufbar ist, die ausschließlich diesem bestimmten Slave (1 oder 2) in Verbindung mit seiner Slave-Adresse zugeordnet sind.

2. Aktuator-Sensor-Interface-System nach Anspruch 1, **gekennzeichnet durch** folgende Merkmale:
die Slaves (1,2) sind jeweils über Schalter (4,5) mit der Leitung verbunden und in jedem Slave (1,2) ist eine Logik vorgesehen, die Mittel zur Auslösung der Schalter (4,5) nach Erkennen des Nichtaufrufs des betreffenden Slaves (1 oder 2) unter Auswertung des Informationsteils des Master-Telegramms aufweist.

3. Aktuator-Sensor-Interface-System nach Anspruch 1 oder 2,
**dadurch gekennzeichnet, dass** Mittel zur zyklischen Freigabe der Slave-Antwort des Slaves mit identischer Slave-Adresse jeweils bei einem anderen Slave vorgesehen sind.

4. Aktuator-Sensor-Interface-System nach einem der vorangehenden Ansprüche,
**dadurch gekennzeichnet, dass** das Master-Telegramm einen Datenteil mit einem die Freigabe der Slave-Antwort steuernden Inhalt enthält.

5. Aktuator-Sensor-Interface-System nach einem der vorangehenden Ansprüche,
**dadurch gekennzeichnet, dass** das Master-Telegramm einen Parameter-Teil mit einem die Freigabe der Slave-Antwort steuernden Inhalt enthält.

6. Aktuator-Sensor-Interface-System nach einem der vorangehenden Ansprüche,
**dadurch gekennzeichnet, dass** die Leitung als Zweidraht-Bus (3) ausgeführt ist.

## Claims

1. Actuator/sensor interface system with a master with a plurality of slaves (1, 2), which are connected via a circuit (3) to the master and to each of which a specific n-bit slave address is assigned to differentiate it from the other slaves, via which the respective slave (1 or 2) can be called by the master, whereby for communication between the master and slaves means are provided for outputting information bits as a slave response from the slave to the master according to a master telegram, which contains an n-bit slave address for calling a certain slave and an n1-bit information component for the addressed slave (1 or 2),
**characterized in that** the same n-bit slave address is assigned to a plurality of slaves (1, 2), i.e. users such as actuators and/or sensors, and a certain one of said slaves (1 or 2) can be polled using information bits contained in the information component of the associated master telegram, which are assigned exclusively to this certain slave (1 or 2) in conjunction with it slave address.

2. Actuator/sensor interface system according to Claim 1,
**characterized by** the following features:
the slaves (1, 2) are each connected via switches (4, 5) to the circuit and a logic is provided in each slave (1, 2), which has means for activating the switches (4, 5) after identifying that the relevant slave (1 or 2) was not called during analysis of the information component of the master telegram.

3. Actuator/sensor interface system according to Claim 1 or 2,
**characterized in that** the means for the cyclical release of the slave response of the slave with an identical slave address are provided in the other slave in each instance.

4. Actuator/sensor interface system according to one of the preceding Claims,
**characterized in that** the master telegram contains a data component with a content controlling the release of the slave response.

5. Actuator/sensor interface system according to one of the preceding Claims,
**characterized in that** the master telegram contains a parameter component with a content controlling the release of the slave response.

6. Actuator/sensor interface system according to one of the preceding Claims,
**characterized in that** the circuit is configured as a two-wire bus (3).

## Revendications

1. Système d'interface pour capteurs et actionneurs qui comporte un maître et plusieurs esclaves (1, 2) qui sont reliés au maître par l'intermédiaire d'une ligne (3) et auxquels il est associé à chaque fois une adresse d'esclave à n bits particulière qui sert à la distinction des autres esclaves et par l'intermédiaire de laquelle l'esclave respectif (1 ou 2) peut être appelé par le maître et dans lequel il est prévu pour la communication entre le maître et les esclaves des moyens pour la sortie de bits d'informations comme réponse d'esclave par l'esclave vers le maître après un télégramme de maître qui contient une adresse d'esclave à n bits pour l'appel d'un certain esclave ainsi qu'une partie informationnelle constituée de n1 bits pour l'esclave adressé (1 ou 2),
**caractérisé par le fait qu'**il est associé à plusieurs esclaves (1, 2), c'est-à-dire aussi à des utilisateurs, tels des actionneurs et/ou des capteurs, la même adresse d'esclave constituée de n bits et qu'un esclave déterminé parmi ces esclaves (1 ou 2) peut être appelé par l'intermédiaire de bits d'informations qui sont contenus dans la partie informationnelle du télégramme de maître considéré et qui sont associés exclusivement à cet esclave déterminé (1 ou 2) en relation avec son adresse d'esclave.

2. Système d'interface pour capteurs et actionneurs selon la revendication 1,
**caractérisé par le fait que** les esclaves (1, 2) sont reliés à chaque fois par l'intermédiaire d'interrupteurs (4, 5) à la ligne et il est prévu dans chaque esclave (1, 2) une logique qui comporte des moyens pour le déclenchement des interrupteurs (4, 5) après la détection du non-appel de l'esclave considéré (1 ou 2) en évaluant la partie informationnelle du télégramme de maître.

3. Système d'interface pour capteurs et actionneurs selon la revendication 1 ou 2,
**caractérisé par le fait qu'**il est prévu des moyens pour la libération cyclique de la réponse de l'esclave ayant une adresse d'esclave identique à chaque fois pour un autre esclave.

4. Système d'interface pour capteurs et actionneurs selon l'une des revendications précédentes,
**caractérisé par le fait que** le télégramme de maître contient une partie de données avec un contenu commandant la libération de la réponse d'esclave.

5. Système d'interface pour capteurs et actionneurs selon l'une des revendications précédentes,
**caractérisé par le fait que** le télégramme de maître contient une partie de paramètres avec un contenu commandant la libération de la réponse d'esclave.

6. Système d'interface pour capteurs et actionneurs selon l'une des revendications précédentes,
**caractérisé par le fait que** la ligne est réalisée comme un bus bifilaire (3).
